# EUROPEAN PATENT SPECIFICATION

(11) **EP 2 894 800 B1**
(45) Date of publication and mention of the grant of the patent: **30.03.2016**
(21) Application number: 14305026.8
(22) Date of filing: 09.01.2014
(51) Int. Cl.: H04J 14/02

(54) **Optical interconnection device and method**
Optische Verbindungsvorrichtung und Verfahren
Procédé et dispositif d'interconnexion optique

(43) Date of publication of application: 15.07.2015
(73) Proprietor: ALCATEL LUCENT, 92100 Boulogne-Billancourt (FR)
(72) Inventor: De Valicourt, Guilhem, 91620 Nozay (FR); Chiaroni, Dominique, 91620 Nozay (FR)
(74) Representative: Sciaux, Edmond

(56) References cited:
- WO-A2-2009/025474
- US-A1- 2008 138 073
- US-A1- 2010 158 526
- JAE-MYOUNG HYUN ET AL: "Economic Evolution from EPON to WDM-overlaid PON Employing a Wavelength Conversion Node", OPTICAL FIBER COMMUNICATION (OFC 2007) COLLOCATED NATIONAL FIBER OPTIC ENGINEERS CONFERENCE : ANAHEIM, CA, 25 - 29 MARCH 2007, IEEE SERVICE CENTER, PISCATAWAY, NJ, 1 March 2007 (2007-03-01), pages 1-3, XP031146861, ISBN: 978-1-55752-831-5

## Description

### Field of the invention

The invention relates to the technical field of optical communication systems employing wavelength division multiplexing (WDM), in particular to access optical networks such as passive optical networks (WDM-PON).

### Background

The demand for higher capacity access networks is growing to satisfy the continuous penetration of Internet and to support new applications. Fiber-To-The Home (FTTH) systems are considered as a key solution to satisfy such a demand. Today Time-Division Multiplexing (TDM) technique, employing a couple of wavelength channels to serve multiple users for up- and downstream traffic, is being widely used in Passive Optical Networks (PON). For next-generation access networks, upgradeability and high capacity could be obtained using virtual Wavelength-Division Multiplexing point-to-point connections in PON (WDM-PON). However, implementing WDM transmissions in the final client devices such as Optical Network Units (ONUs) poses new challenges in terms wavelength control and stability, inventory size and cost of the client device. Economic Evolution from EPON to WDM-overlaid PON Employing a Wavelength Conversion Node, Jae-Myoung Hyun and al. discloses a cost-effective evolution architecture from EPON to WDM-overlaid PON wherein the colorless characteristics of ONUs is maintained thanks to a wavelength-conversion node. US2008138073 discloses a wavelength conversion apparatus in a Time Division Multiplexing Passive Optical Network (TDM-PON) system based on a Wavelength Division Multiplexing (WDM) system.

### Summary

In an embodiment, the invention provides a method for transmitting modulated optical signals between a central optical node and a first and a second optical client terminals in a bidirectional manner, the method comprising:
generating a first downstream optical signal intended for the first optical client terminal at the central optical node, the first downstream optical signal being carried by a first wavelength channel of a frequency grid,
receiving a first upstream optical signal originating from the first optical client terminal at the central optical node, the first upstream optical signal being carried by a second wavelength channel of the frequency grid,
generating a second downstream optical signal intended for the second optical client terminal at the central optical node, the second downstream optical signal being carried by a third wavelength channel of the frequency grid,
receiving a second upstream optical signal originating from the second optical client terminal at the central optical node, the second upstream optical signal being carried by a fourth wavelength channel of the frequency grid,
propagating the first and second upstream optical signals and the first and second downstream optical signals as wavelength multiplexed signals on a central optical link between the central optical node and an optical interconnection device, wherein the optical interconnection device is connected to the first optical client terminal by a first client optical link and to the second optical client terminal by a second client optical link, the method further comprising at the optical interconnection device: converting the first downstream optical signal from the first wavelength channel of the frequency grid to a downstream black-and-white wavelength channel and transmitting the first downstream optical signal carried by the downstream black-and-white wavelength channel to the first optical client terminal through the first client optical link,
converting the second downstream optical signal from the third wavelength channel of the frequency grid to the downstream black-and-white wavelength and transmitting the second downstream optical signal carried by the downstream black-and-white wavelength channel to the second optical client terminal through the second client optical link,
receiving the first upstream optical signal carried by an upstream black-and-white wavelength channel through the first client optical link and converting the first upstream optical signal to the second wavelength channel of the frequency grid for transmission to the central optical node through the central optical link, and
receiving the second upstream optical signal carried by the upstream black-and-white wavelength channel through the second client optical link and converting the second upstream optical signal to the fourth wavelength channel of the frequency grid for transmission to the central optical node through the central optical link.

In an embodiment, the invention also provides an optical interconnection device comprising:
a bidirectional WDM port adapted to be connected to a central optical link for receiving downstream optical signals carried on respective wavelengths channels of a frequency grid and for transmitting upstream optical signals carried on respective wavelengths channels of the frequency grid,
a plurality of bidirectional black-and-white ports each adapted to be connected to a respective client optical link for receiving a respective upstream optical signal carried on an upstream black-and-white wavelength channel and for transmitting a respective downstream optical signal carried on a downstream black-and-white wavelength channel,
an upstream conversion section arranged between the plurality of bidirectional black-and-white ports and the bidirectional WDM port, the upstream conversion section comprising:
   a plurality of upstream wavelength-converters each connected to a respective one of the bidirectional black-and-white ports for receiving the respective upstream optical signal, wherein the upstream wavelength-converter is adapted for converting the upstream optical signal from the upstream black-and-white wavelength channel to a respective wavelength channel of the frequency grid, and
   a wavelength multiplexer arranged for combining the plurality of wavelength-converted upstream optical signals into the bidirectional WDM port for transmission through the central optical link, and
a downstream conversion section arranged between the bidirectional WDM port and the plurality of bidirectional black-and-white ports, the downstream conversion section comprising:
   a wavelength demultiplexer arranged for separating the downstream optical signals received by the bidirectional WDM port as a function of wavelength channels, and
   a plurality of downstream wavelength-converters each arranged for converting a respective downstream optical signal separated by the wavelength demultiplexer from the respective wavelength channel of the frequency grid to the downstream black-and-white wavelength channel and each connected to a respective one of the bidirectional black-and-white ports for transmitting the wavelength-converted downstream optical signal to the respective bidirectional black-and-white port for transmission through the client optical link.

In embodiments, such an optical interconnection device may further comprise one or more of the following features.

In an embodiment, the device further comprises an optical circulator having a first branch connected to the upstream conversion section, a second branch connected to the downstream conversion section, and a third branch connected to a port selected in the group consisting of the bidirectional WDM port and the bidirectional black-and-white ports.

In an embodiment, an upstream wavelength-converter comprises a first input connected to the respective bidirectional black-and-white port for receiving the respective upstream optical signal and a second input for receiving a continuous wave signal at the carrier frequency the respective wavelength channel of the frequency grid.

In an embodiment, the upstream conversion section further comprises a light source for generating a broadband light signal and a wavelength demultiplexer arranged for separating respective spectral components of the broadband light signal corresponding to the respective wavelength channels of the frequency grid: wherein the wavelength demultiplexer has a plurality of outputs connected to the second inputs of a plurality of the upstream wavelength-converters.

In an embodiment, the wavelength multiplexer of the upstream conversion section is adapted to pass the respective wavelength channels of the frequency grid generated by the upstream wavelength-converters and to block the upstream black-and-white wavelength channel.

In an embodiment, the wavelength multiplexer of the upstream conversion section and/or the wavelength demultiplexer of the downstream conversion section comprises an arrayed waveguide grating.

In an embodiment, a downstream wavelength-converter comprises a first input connected to the wavelength demultiplexer for receiving the respective downstream optical signal and a second input for receiving a continuous wave signal at the carrier frequency of the downstream black-and-white wavelength channel.

In an embodiment, the downstream conversion section further comprises a laser source for generating the continuous wave signal at the carrier frequency of the downstream black-and-white wavelength channel and an optical splitter arranged for distributing the continuous wave signal to the second inputs of a plurality of the downstream wavelength-converters.

In an embodiment, the downstream conversion section further comprises an optical filter arranged between a downstream wavelength-converter and the corresponding bidirectional black-and-white port for blocking the respective wavelength channel of the frequency grid.

In an embodiment, the upstream wavelength-converters and downstream wavelength-converters comprise semiconductor optical amplifiers adapted to perform wavelength conversion in the optical domain. Wavelength conversion in the optical domain is more energy efficient than optical/electrical/optical conversion.

In an embodiment, the wavelength demultiplexer of the downstream conversion section and the wavelength multiplexer of the upstream conversion section are implemented as an integrated optical component made of silicon on a silica substrate, wherein the integrated optical component further comprises waveguides for connecting the wavelength demultiplexer and the wavelength multiplexer to the bidirectional ports of the device.

In an embodiment, the upstream wavelength-converters and the downstream wavelength-converters are implemented as a second integrated optical component made of III-V semiconductor materials and stacked onto the first integrated optical component having the silica substrate, wherein the upstream wavelength-converters and the downstream wavelength-converters are optically coupled to the waveguides. In alternative embodiments, all devices may be integrated monolithically, e.g. in an In-P platform.

In an embodiment, the device is installed in or close to a building containing a plurality of optical client terminals each connected to a respective bidirectional black-and-white port of the interconnection device by a respective client optical link.

In an embodiment, an optical communication system comprises:
the interconnection device,
a plurality of optical client terminals each connected to a respective bidirectional black-and-white port of the interconnection device by a respective client optical link, wherein each optical client terminal comprises an optical transmitter adapted to generate an upstream optical signal carried on the upstream black-and-white wavelength channel and an optical receiver adapted to receive a downstream optical signal carried on the downstream black-and-white wavelength channel, and
a central optical node connected to the bidirectional WDM port of the interconnection device by a central optical link, wherein the central optical node comprises a plurality of optical transmitters each adapted to generate a downstream optical signal carried by a respective wavelength channel of a frequency grid allocated to a respective one of the optical client terminals and,
a plurality of optical receivers each adapted to receive an upstream optical signal carried by a respective wavelength channel of the frequency grid allocated to a respective one of the optical client terminals.

Aspects of the invention are based on the idea of using a black-and-white optical layer in a short, last segment of an optical access network to enable standardization and mass-production of the client terminals and limit the inventory of client terminals and associated cost. Aspects of the invention are based on the idea of assigning respective upstream and downstream wavelength channels to each client terminal for high-capacity WDM transmission to a central office that may be located at some distance from the terminals, e.g. between 1 and 10 km. Aspects of the invention are based on the idea of using direct modulation laser sources as the transmitters in the client terminals to obtain a higher capacity, e.g. about 10Gb/s, and/or lower complexity than other solutions such as modulators based on reflective semiconductor optical amplifiers. Aspects of the invention are based on the idea of providing an easy upgrade of GPON network where a single wavelength is used.

### Brief description of the drawings

These and other aspects of the invention will be apparent from and elucidated with reference to the embodiments described hereinafter, by way of example, with reference to the drawings.
Figure 1 is a functional representation of an access optical network comprising a plurality of client optical network units connected to a central office through an interconnection node.
Figure 2 is a functional representation of an interconnection node that may be used in the access network of Fig. 1.
Figure 3 is a functional representation of an SOA-based wavelength-converter that may be used in the interconnection node of Fig. 2.
Figure 4 is a graphic showing the transfer function of an arrayed waveguide grating that may be used in the interconnection node of Fig. 2.

### Detailed description of the embodiments

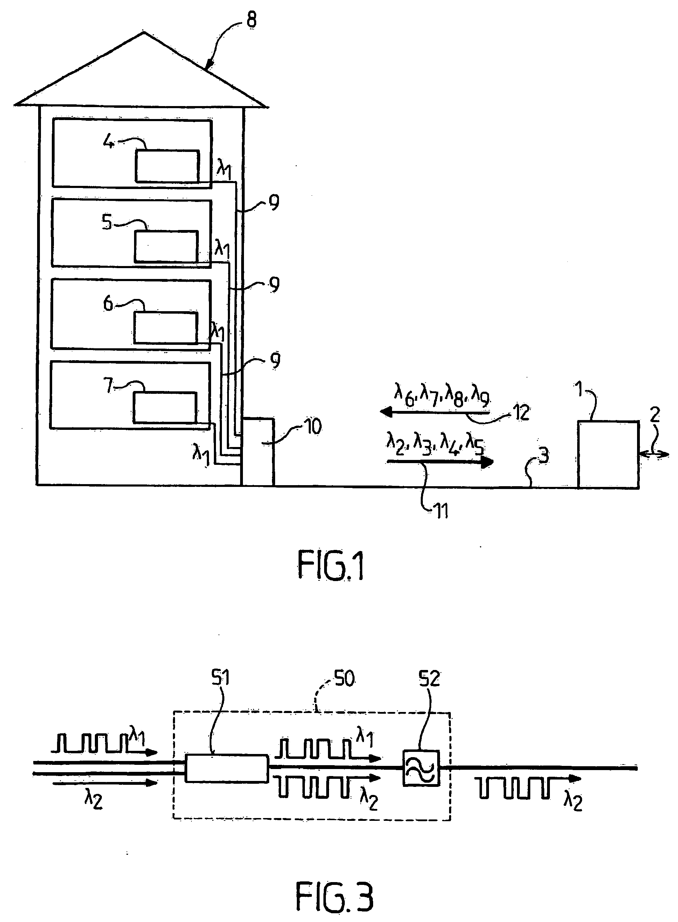

With reference to Figure 1, there is shown an access network in the form of a Passive Optical Networks (PON) of the Fiber-To-The Home (FTTH) type. On the network side, a central office 1 is connected to further network segments not shown as indicated by arrow 2. The central office 1 includes optical transmitters and receivers arranged as in conventional WDM-PON systems, i.e. adapted to send and receive wavelength-multiplexed optical signals on client-specific wavelength channels through an optical fiber 3.

On the client side, a plurality of optical network units 4-7 is arranged in a building 8 or other inhabitable facility to serve as user terminals connected to the central office 1 through an intermediate network element 10. Each optical network unit (ONU) 4-7 includes an optical transmitter, e.g. a direct modulation laser source , arranged to send a client-specific modulated optical signal on a fixed upstream wavelength-channel λ1 to the intermediate network element 10 through a client-specific optical fiber 9. Each optical network unit 4-7 also includes an optical receiver arranged to receive a client-specific modulated optical signal on a fixed downstream wavelength-channel λ10 from the intermediate network element 10 through the client-specific optical fiber 9.

The same upstream wavelength-channel λ1 and the same downstream wavelength-channel λ10 are used by all optical network units 4-7 on the client-specific optical fibers 9. For that reason, the shared wavelength-channels λ1 and λ10 will be referred to as black-and-white wavelength-channels or black-and-white layer. As one optical fiber 9 reaches every ONU, the use of the same wavelengths does not cause any crosstalk between the respective client signals. Therefore, the optical network units 4-7 are all identical, at least in terms of optical receivers and transmitters, which facilitates the manufacturing and deployment of the ONUs. Also, since it is not necessary to provide the ONUs with wavelength-tuning capability, the simplicity is improved and the cost of these devices can be reduced. In other words, a WDM transmission is possible without the need for colorless ONU.

The intermediate network element 10 serves mostly as a wavelength conversion device between the black-and-white layer deployed on the client side, i.e. in optical fibers 9 and the WDM layer deployed on the central office side, i.e. in optical fiber 3.

The intermediate network element 10 may be arranged at different locations between the central office 1 and the user terminals. In an embodiment adapted for urban environments with a high population density, the ONUs 4-7 are located in respective apartments in one buildings 8 and the intermediate network element 10 is arranged close to the building 8, e.g. in the basement.

In an embodiment the ONUs 4-7 use direct modulation laser sources (DMLs) having an Electrical-to-optical bandwidth around 10 GHz. All DMLs are emitting data at the same wavelength λ1. All upstream client signals at the wavelength λ1 reach the intermediate network element 10 where they are converted into the client-specific wavelength channels λ2 to λ5, multiplexed together and sent to the central office 1 through the common optical fiber 3, as shown by arrow 11. The optical fiber 3 is connected to the central office 1 (CO) a.k.a. the optical link terminal (OLT). Other types of modulated sources may be used as well, e.g. CW lasers with external modulators such as Mach-Zehnder modulators (MZM),

The downstream communication is similar but in the opposite way. Several client-specific wavelength channels λ6 to λ9 coming from the CO 1 reach the intermediate network element 10 in a wavelength-multiplexed form through the optical fiber 3, as shown by arrow 12. Preferably, different wavelength channels serve for the upstream and the downstream communications in order to avoid the Rayleigh backscattering effect that may limit the bit rate and transmission reach. Namely, in the common optical fiber 3, the wavelength channels λ2 and λ6 are assigned to ONU 4, the wavelength channels λ3 and λ7 are assigned to ONU 5 and so on.

The wavelength channels propagating on optical fiber 3 are arranged on a WDM frequency grid so that they do not collide with one another. The frequency grid may be regular or irregular, standard or non-standard, fixed or varying.

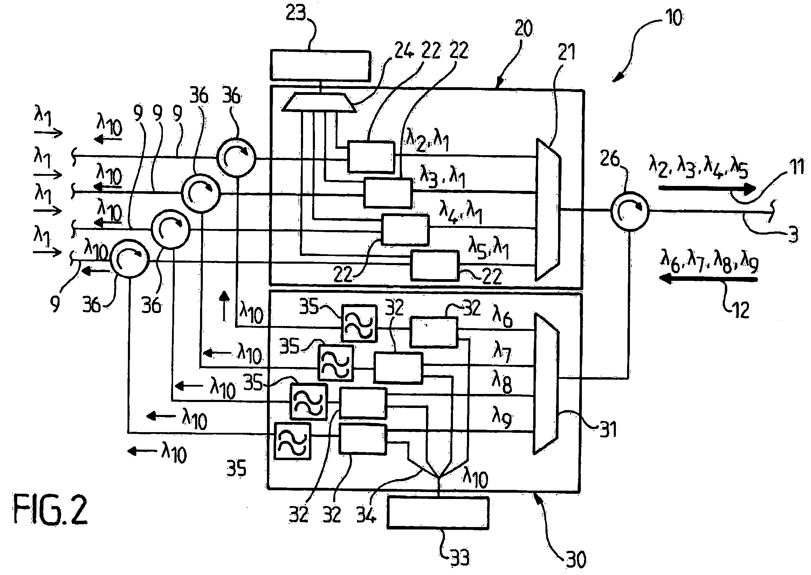

Figure 2 illustrates a suitable embodiment of the intermediate network element 10. Elements identical or similar to those of figure 1 are designated by the same numeral. From a functional perspective, the intermediate network element 10 may be split into an upstream section 20 and a downstream section 30. The downstream section 30 effectuates demultiplexing of the client specific downstream wavelength channels, conversion to the downstream black-and-white wavelength and distribution to the client-specific optical fibers 9. The upstream section 20 effectuates conversion from the upstream black-and-white wavelength to the client-specific upstream wavelength channels and multiplexing of the client-specific upstream wavelength channels.

In the downstream section 30, all downstream modulated optical signals carried on the client-specific wavelength channels λ6, λ7, λ8 and λ9 are demultiplexed using a demultiplexer 31, for example an AWG. Then each modulated optical signal intended for a specific client reaches a respective wavelength-converter 32 to be converted into the downstream black-and-white wavelength λ10. A continuous wave (CW) laser source 33 serves to generate a CW signal at the wavelength λ10 which is divided by a power splitter 34 to feed all the different wavelength-converters 32. In an embodiment, an optical amplifier is connected at the input of the power splitter 34 to increase available power per client and/or the number of clients. After the wavelength-converters 32, an optical filter 35 is arranged to filter out all the client-specific downstream wavelength channels λ6 to λ9 and to pass only the downstream black-and-white wavelength λ10. The output of the filter 35 is fixedly connected through an optical circulator 36 to the client-specific fiber 9 corresponding to the ONU for which the modulated optical signal is intended, i.e. there is a fixed mapping between the client-specific wavelength channels received at the input of the downstream section 30 and the client-specific fibers 9. However such mapping could be rendered reconfigurable by relying on a reconfigurable demultiplexer 31, e.g. a Wavelength selective switch instead of an AWG. Reconfigurability may also be obtained by adding a spatial switch after demultiplexer 31 or optical circulator 36. All downstream signals on the black-and-white layer are eventually sent to the different ONUs.

A similar mapping exists between the client-specific fibers 9 connected through the circulators 36 to inputs of the upstream section 20 and the client-specific upstream wavelength channels λ2 to λ5 emitted at the output of the upstream section 20. Each of the upstream modulated optical signals carried on the black-and-white wavelength λ₁ is converted into the corresponding client-specific upstream wavelength channel λ₂, λ₃, λ₄ or λ₅ by a respective wavelength-converter 22. Then the converted upstream optical signals are multiplexed using a multiplexer 21, for example an AWG.

In an alternative embodiment of the upstream section, the respective wavelength-converters are fed by CW colored laser sources tuned to the desired wavelength, namely λ2, λ3, λ4 or λ5. Depending on the origins of the signals at λ₁, i.e. the different ONUs, a different wavelength is fed into the wavelength-converter. The laser sources may be built integrally with the whole upstream section. For the sake of flexibility, the laser sources may be wavelength-tunable.

Similarly, in a non-illustrated embodiment, one different laser source emitting the wavelength A10 is used for each wavelength converter 32. Although more expensive, this arrangement provides higher performances. All laser sources at the wavelength λ10 could be integrated into the same chip.

In the embodiment shown, a continuous wave signal is launched into each of the wavelength-converters 22 by a single broadband light source 23, e.g. a source operating with Amplified Spontaneous Emission noise. Namely, the broadband signal emitted is sliced into respective spectral components corresponding to the upstream wavelength channels λ2 to λ5 by an arrayed waveguide grating 24. Such spectral slicing could also be obtained with an echelle grating or other similar device. Beyond the wavelength-converters 22, all the upstream modulated signals carried on the client-specific wavelength channels are multiplexed by the multiplexer 21 and passed to the optical fiber 3 through an optical circulator 26.

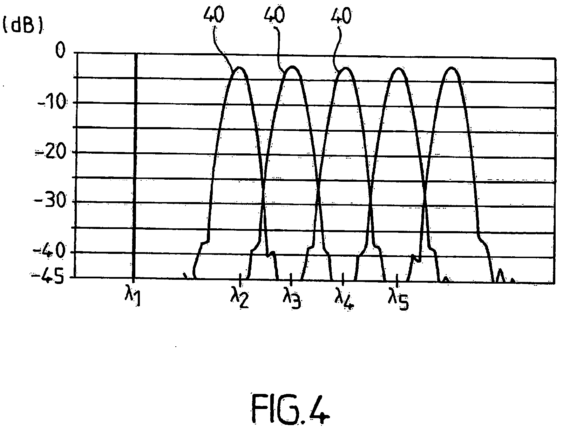

The multiplexer 21 may be implemented as an AWG adapted to also filter out the black-and-white wavelength λ₁. This is done, as illustrated on Fig. 4, by selecting the black-and-white wavelength λ₁ and the free spectral range of the AWG so that the black-and-white wavelength λ₁ falls outside the transmission windows 40 of the AWG. Therefore for the uplink communication, all signals at wavelength λ₁ are converted into the client-specific channels λ₂, λ₃, λ₄ and λ₅ in order to obtain a virtual point-to-point connection between the different ONUs at the central office 1 via WDM techniques.

In an embodiment, the upstream section 20 and downstream section 30, without the circulators, are integrated into a photonic chip based on Indium-Phosphide or Silicon materials. For example, a hybrid component may be fabricated, in which the AWGs, optical couplers, wavelength filters and waveguides are made in Si and the rest in III-V materials stacked on top of the Silicon, i.e. the wavelength-converters and CW sources. The Si wavelength filters may be implemented as ring resonators.

Embodiments of the wavelength converters suitable for photonic integration are schematically depicted on Fig. 3, which illustrates conversion from wavelength λ1 to wavelength λ2. This device is used to transfer the modulation from one wavelength to the other. Namely, the wavelength converter 50 includes a semiconductor optical amplifier 51 having two inputs which receive the modulated signal at wavelength λ1 and a CW signal at wavelength λ2. A physical interaction takes place in the SOA so that both wavelengths are output with the inverted modulation. Then a spectral filter filters out the initial modulated signal at wavelength λ1 to pass only the new modulated signal at wavelength λ2. The physical interaction between both signals may be based on phenomena such as cross gain modulation, In-Phase cross phase modulation, Out-of-Phase cross phase modulation or others.

Whereas embodiments have been described using amplitude-modulated optical signals, other modulation types such as phase modulation could also be used. With phase-modulated optical signals, a wavelength and phase converter module should be used instead of the wavelength converter described above.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for transmitting modulated optical signals between a central optical node (1) and a first and a second optical client terminals (4, 5) in a bidirectional manner, the method comprising:
generating a first downstream optical signal intended for the first optical client terminal (4) at the central optical node, the first downstream optical signal being carried by a first wavelength channel (λ6) of a frequency grid,
receiving a first upstream optical signal originating from the first optical client terminal at the central optical node, the first upstream optical signal being carried by a second wavelength channel (λ2) of the frequency grid,
generating a second downstream optical signal intended for the second optical client terminal (5) at the central optical node, the second downstream optical signal being carried by a third wavelength channel (λ7) of the frequency grid,
receiving a second upstream optical signal originating from the second optical client terminal at the central optical node, the second upstream optical signal being carried by a fourth wavelength channel (λ3) of the frequency grid,
propagating the first and second upstream optical signals and the first and second downstream optical signals as wavelength multiplexed signals on a central optical link (3) between the central optical node and an optical interconnection device (10), wherein the optical interconnection device is connected to the first optical client terminal (4) by a first client optical link (9) and to the second optical client terminal (5) by a second client optical link (9), the method further comprising at the optical interconnection device:
receiving the first upstream optical signal carried by an upstream black-and-white wavelength channel (λ1) through the first client optical link and converting the first upstream optical signal to the second wavelength channel (λ2) of the frequency grid for transmission to the central optical node through the central optical link (3), and
receiving the second upstream optical signal carried by the upstream black-and-white wavelength channel (λ1) through the second client optical link and converting the second upstream optical signal to the fourth wavelength channel (λ3) of the frequency grid for transmission to the central optical node through the central optical link (3),
**characterized in that** the method further comprises, at the optical interconnection device:
converting the first downstream optical signal from the first wavelength channel (λ6) of the frequency grid to a downstream black-and-white wavelength channel (λ10) and transmitting the first downstream optical signal carried by the downstream black-and-white wavelength channel to the first optical client terminal through the first client optical link,
converting the second downstream optical signal from the third wavelength channel (λ7) of the frequency grid to the downstream black-and-white wavelength (λ10) and transmitting the second downstream optical signal carried by the downstream black-and-white wavelength channel to the second optical client terminal through the second client optical link.

2. An optical interconnection device (10), the device comprising:
a bidirectional WDM port adapted to be connected to a central optical link (3) for receiving downstream optical signals carried on respective wavelengths channels (λ6-λ9) of a frequency grid and for transmitting upstream optical signals carried on respective wavelengths channels (λ2-λ5) of the frequency grid,
a plurality of black-and-white ports each adapted to be connected to a respective client optical link (9) for receiving a respective upstream optical signal carried on an upstream black-and-white wavelength channel (λ1),
an upstream conversion section (20) arranged between the plurality of black-and-white ports and the bidirectional WDM port, the upstream conversion section comprising:
a plurality of upstream wavelength-converters (22) each connected to a respective one of the black-and-white ports for receiving the respective upstream optical signal, wherein the upstream wavelength-converter is adapted for converting the upstream optical signal from the upstream black-and-white wavelength channel to a respective wavelength channel of the frequency grid, and
a wavelength multiplexer (21) arranged for combining the plurality of wavelength-converted upstream optical signals into the bidirectional WDM port for transmission through the central optical link (3),
**characterized in that** the device is further suitable for use in the method of claim 1, wherein the black-and-white ports are bidirectional and adapted to transmit a respective downstream optical signal carried on a downstream black-and-white wavelength channel (λ10) to the respective client optical link (9), the optical interconnection device (10) further comprising:
a downstream conversion section (30) arranged between the bidirectional WDM port and the plurality of bidirectional black-and-white ports, the downstream conversion section comprising:
a wavelength demultiplexer (31) arranged for separating the downstream optical signals received by the bidirectional WDM port as a function of wavelength channels, and
a plurality of downstream wavelength-converters (32) each arranged for converting a respective downstream optical signal separated by the wavelength demultiplexer from the respective wavelength channel of the frequency grid to the downstream black-and-white wavelength channel and each connected to a respective one of the bidirectional black-and-white ports for transmitting the wavelength-converted downstream optical signal to the respective bidirectional black-and-white port for transmission through the client optical link (9).

3. The device in accordance with claim 2, further comprising an optical circulator (26, 36) having a first branch connected to the upstream conversion section (20), a second branch connected to the downstream conversion section (30), and a third branch connected to a port selected in the group consisting of the bidirectional WDM port and the bidirectional black-and-white ports.

4. The device in accordance with any one of claims 2 to 3, wherein an upstream wavelength-converter (22) comprises a first input connected to the respective bidirectional black-and-white port for receiving the respective upstream optical signal and a second input for receiving a continuous wave signal at the carrier frequency the respective wavelength channel of the frequency grid.

5. The device in accordance with claim 4, wherein the upstream conversion section further comprises a light source (23) for generating a broadband light signal and a wavelength demultiplexer (24) arranged for separating respective spectral components of the broadband light signal corresponding to the respective wavelength channels of the frequency grid:
wherein the wavelength demultiplexer has a plurality of outputs connected to the second inputs of a plurality of the upstream wavelength-converters (22).

6. The device in accordance with any one of claims 2 to 5, wherein the wavelength multiplexer (21) of the upstream conversion section is adapted to pass the respective wavelength channels (λ2-λ5) of the frequency grid generated by the upstream wavelength-converters and to block the upstream black-and-white wavelength channel (λ1).

7. The device in accordance with any one of claims 2 to 6, wherein the wavelength multiplexer (21) of the upstream conversion section and/or the wavelength demultiplexer (31) of the downstream conversion section comprises an arrayed waveguide grating.

8. The device in accordance with any one of claims 2 to 7, wherein a downstream wavelength-converter (32) comprises a first input connected to the wavelength demultiplexer (31) for receiving the respective downstream optical signal and a second input for receiving a continuous wave signal at the carrier frequency of the downstream black-and-white wavelength channel.

9. The device in accordance with claim 8, wherein the downstream conversion section further comprises a laser source (33) for generating the continuous wave signal at the carrier frequency of the downstream black-and-white wavelength channel (λ10) and an optical splitter (34) arranged for distributing the continuous wave signal to the second inputs of a plurality of the downstream wavelength-converters (32).

10. The device in accordance with any one of claims 2 to 9, wherein the downstream conversion section further comprises an optical filter (35) arranged between a downstream wavelength-converter (32) and the corresponding bidirectional black-and-white port for blocking the respective wavelength channel (λ6-λ9) of the frequency grid.

11. The device in accordance with any one of claims 2 to 10, wherein the upstream wavelength-converters (22) and downstream wavelength-converters (32) comprise semiconductor optical amplifiers (51) adapted to perform wavelength conversion in the optical domain.

12. The device in accordance with any one of claims 2 to 11, wherein the wavelength demultiplexer (31) of the downstream conversion section and the wavelength multiplexer (21) of the upstream conversion section are implemented as an integrated optical component made of silicon on a silica substrate, wherein the integrated optical component further comprises waveguides for connecting the wavelength demultiplexer and the wavelength multiplexer to the bidirectional ports of the device.

13. The device in accordance with claim 12, wherein the upstream wavelength-converters (22) and the downstream wavelength-converters (32) are implemented as a second integrated optical component made of III-V semiconductor materials and stacked onto the first integrated optical component having the silica substrate, wherein the upstream wavelength-converters and the downstream wavelength-converters are optically coupled to the waveguides.

14. The device in accordance with any one of claims 2 to 13, wherein the device (10) is installed in or close to a building (8) containing a plurality of optical client terminals (4-7) each connected to a respective bidirectional black-and-white port of the interconnection device by a respective client optical link (9).

15. An optical communication system comprising:
the interconnection device (10) in accordance with any one of claims 2 to 14,
a plurality of optical client terminals (4-7) each connected to a respective bidirectional black-and-white port of the interconnection device by a respective client optical link (9), wherein each optical client terminal comprises an optical transmitter adapted to generate an upstream optical signal carried on the upstream black-and-white wavelength channel (λ1) and an optical receiver adapted to receive a downstream optical signal carried on the downstream black-and-white wavelength channel (λ10), and
a central optical node (1) connected to the bidirectional WDM port of the interconnection device by a central optical link (3), wherein the central optical node comprises a plurality of optical transmitters each adapted to generate a downstream optical signal carried by a respective wavelength channel (λ6-λ9) of a frequency grid allocated to a respective one of the optical client terminals and,
a plurality of optical receivers each adapted to receive an upstream optical signal carried by a respective wavelength channel (λ2-λ5) of the frequency grid allocated to a respective one of the optical client terminals.

## Patentansprüche

1. Verfahren für die bidirektionale Übertragung modulierter optischer Signale zwischen einem zentralen optischen Knoten (1) sowie einem ersten und einem zweiten optischen Kundenendgerät (4, 5), wobei das Verfahren umfasst:
Generieren eines ersten, an das erste optische Kundenendgerät (4) gerichteten, optischen Downstreamsignals am zentralen optischen Knoten, wobei das erste optische Downstreamsignal von einem ersten Wellenlängenkanal (λ6) eines Frequenzgitters getragen wird,
Empfangen eines ersten, vom ersten optischen Kundenendgerät herrührenden, optischen Upstreamsignals am zentralen optischen Knoten, wobei das erste optische Upstreamsignal von einem zweiten Wellenlängenkanal (λ2) des Frequenzgitters getragen wird,
Generieren eines zweiten, an das zweite optische Kundenendgerät (5) gerichteten, optischen Downstreamsignals am zentralen optischen Knoten, wobei das zweite optische Downstreamsignal von einem dritten Wellenlängenkanal (λ7) des Frequenzgitters getragen wird,
Empfangen eines zweiten, vom zweiten optischen Kundenendgerät herrührenden, optischen Upstreamsignals am zentralen optischen Knoten, wobei das zweite optische Upstreamsignal von einem vierten Wellenlängenkanal (λ3) des Frequenzgitters getragen wird,
Verbreiten des ersten und zweiten optischen Upstreamsignals sowie des ersten und zweiten optischen Downstreamsignals als wellenlängengemultiplexte Signale auf einem zentralen optischen Link (3) zwischen dem zentralen optischen Knoten und einer optischen Verschaltungsvorrichtung (10), wobei die optische Verschaltungsvorrichtung über einen ersten optischen Kundenlink (9) mit dem ersten optischen Kundenendgerät (4) und über einen zweiten optischen Kundenlink (9) mit dem zweiten optischen Kundenendgerät (5) verbunden ist, wobei das Verfahren an der optischen Verschaltungsvorrichtung weiterhin umfasst:
Empfangen des ersten, von einem upstream liegenden Schwarz-Weiß-Wellenlängenkanal (λ1) getragenen, optischen Upstreamsignals über den ersten optischen Kundenlink und Konvertieren des ersten optischen Upstreamsignals für den zweiten Wellenlängenkanal (λ2) des Frequenzgitters zwecks Übertragung über den zentralen optischen Link (3) zum zentralen optischen Knoten, Empfangen des zweiten, von dem upstream liegenden Schwarz-Weiß-Wellenlängenkanal (λ1) getragenen, optischen Upstreamsignals über den zweiten optischen Kundenlink und Konvertieren des zweiten optischen Upstreamsignals für den vierten Wellenlängenkanal (λ3) des Frequenzgitters zwecks Übertragung über den zentralen optischen Link (3) zum zentralen optischen Knoten,
**dadurch gekennzeichnet, dass** das Verfahren an der optischen Verschaltungsvorrichtung weiterhin umfasst:
Konvertieren des ersten optischen Downstreamsignals vom ersten Wellenlängenkanal (λ6) des Frequenzgitters für einen downstream liegenden Schwarz-Weiß-Wellenlängenkanal (λ10) und Übertragen des ersten optischen Downstreamsignals, das von dem downstream liegenden Schwarz-Weiß-Wellenlängenkanal getragen wird, über den ersten optischen Kundenlink zum ersten optischen Kundenendgerät,
Konvertieren des zweiten optischen Downstreamsignals vom dritten Wellenlängenkanal (λ7) des Frequenzgitters für die downstream liegende Schwarz-Weiß-Wellenlänge (λ10) und Übertragen des zweiten optischen Downstreamsignals, das von dem downstream liegenden Schwarz-Weiß-Wellenlängenkanal getragen wird, über den zweiten optischen Kundenlink zum zweiten optischen Kundenendgerät,

2. Optische Verschaltungsvorrichtung (10), umfassend:
einen bidirektionalen WDM-Anschluss, ausgelegt für die Verbindung zu einem zentralen optischen Link (3) zwecks Empfangs von auf jeweiligen Wellenlängenkanälen (λ6 - λ9) getragenen, optischen Downstreamsignalen eines Frequenzgitters und für die Übertragung optischer Upstreamsignale auf jeweiligen Wellenlängenkanälen (λ2 - λ5) des Frequenzgitters.
Eine Vielzahl von Schwarz-Weiß-Anschlüssen, jeder von ihnen ausgelegt für die Verbindung mit einem jeweiligen optischen Kundenlink (9) zwecks Empfangs eines jeweiligen optischen Upstreamsignals, das getragen wird von einem upstream liegenden Schwarz-Weiß-Wellenlängenkanal (λ1),
einen Upstream-Umwandlungsabschnitt (20), eingerichtet zwischen der Vielzahl von Schwarz-Weiß-Anschlüssen und dem bidirektionalen WDM-Anschluss, wobei der upstream-Umwandlungsabschnitt umfasst:
eine Vielzahl von Wellenlängenumwandlern (22), jeder von ihnen verbunden mit einem jeweiligen Anschluss der
Schwarz-Weiß-Anschlüsse zwecks Empfangs des jeweiligen optischen Upstreamsignals, wobei der Upstream-Wellenlängenumwandler ausgelegt ist für das Umwandeln der optischen Upstreamsignale aus dem upstream liegenden Schwarz-Weiß-Wellenlängenkanal für einen jeweiligen Wellenlängenkanal des Frequenzgitters, und einen Wellenlängenmultiplexer (21), ausgelegt für das Kombinieren der Vielzahl wellenlängenumgewandelter optischer Upstreamsignale für den bidirektionalen WDM-Anschluss zwecks Übertragens über den zentralen optischen Link (3),
**dadurch gekennzeichnet, dass** die Vorrichtung weiterhin geeignet ist für ihre Verwendung in dem Verfahren nach Anspruch 1, wobei die Schwarz-Weiß-Anschlüsse bidirektional und dafür ausgelegt sind, ein jeweiliges optisches Downstreamsignal, das von einem downstream liegenden Schwarz-Weiß-Wellenlängenkanal (λ10) getragen wird, an den jeweiligen optischen Kundenlink (9) zu übertragen, wobei die optische Verschaltungsvorrichtung (10) weiterhin umfasst:
einen Downstream-Umwandlungsabschnitt (30), eingerichtet zwischen dem bidirektionalen WDM-Anschluss und der Vielzahl von Schwarz-Weiß-Anschlüssen, wobei der Downstream-Umwandlungsabschnitt umfasst:
einen Wellenlängendemultiplexer (31), ausgelegt für das Trennen der optischen Downstreamsignale, die vom bidirektionalen WDM-Anschluss als Funktion von Wellenlängenkanälen empfangen werden, und
eine Vielzahl von Downstream-Wellenlängenumwandlern (32), jeder von ihnen ausgerichtet für das Umwandeln eines jeweiligen optischen Downstreamsignals, das durch den Wellenlängendemultiplexer getrennt wurde von dem jeweiligen Wellenlängenkanal des Frequenzgitters, für den downstream liegenden Schwarz-Weiß-Wellenlängenkanal, wobei jeder von ihnen verbunden ist mit einem jeweiligen Anschluss der bidirektionalen Schwarz-Weiß-Anschlüsse zwecks Übertragens des wellenlängenumgewandelten optischen Downstreamsignals an den jeweiligen bidirektionalen Schwarz-Weiß-Anschluss zwecks seiner Übertragung über den optischen Kundenlink (9).

3. Vorrichtung nach Anspruch 2, weiterhin einen optischen Zirkulator (26, 36) umfassend, der mit einer ersten Verzweigung an den Upstream-Umwandlungsabschnitt (20), mit einer zweiten Verzweigung an den Downstream-Umwandlungsabschnitt (30) und mit einer dritten Verzweigung an einen Anschluss angeschlossen ist, der ausgewählt ist aus der Gruppe, die gebildet wird von dem bidirektionalen WDM-Anschluss und den bidirektionalen Schwarz-Weiß-Anschlüssen.

4. Vorrichtung nach einem beliebigen der Ansprüche 2 bis 3, wobei ein Upstream-Wellenlängenumwandler (22) einen ersten Eingang umfasst, der Verbunden ist mit dem jeweiligen bidirektionalen Schwarz-Weiß-Anschluss zwecks Empfangs des jeweiligen optischen Upstreamsignals, und einen zweiten Eingang für den Empfang eines Dauerstrichsignals auf der Trägerfrequenz des jeweiligen Wellenlängenkanals des Frequenzgitters.

5. Vorrichtung nach Anspruch 4, wobei der Upstream-Umwandlungsabschnitt weiterhin eine Lichtquelle (23) für das Generieren eines Breitband-Lichtsignals und einen Wellenlängendemultiplexer (24) umfasst, ausgelegt für das Trennen jeweiliger spektraler Komponenten des Breitband-Lichtsignals, die den jeweiligen Wellenlängenkanälen des Frequenzgitters entsprechen;
wobei der Wellenlängendemultiplexer über eine Vielzahl von Ausgängen mit den zweiten Eingängen einer Vielzahl der Upstream-Wellenlängenumwandler (22) verbunden ist.

6. Vorrichtung nach einem beliebigen der Ansprüche 2 bis 5, wobei der Wellenlängenmultiplexer (21) des Upstream-Umwandlungsabschnitts ausgelegt ist für das Weiterleiten der jeweiligen Wellenlängenkanäle (λ2 - λ5) des Frequenzgitters, die von den Upstream-Wellenlängenumwandlern generiert werden, und für das Blockieren des upstream liegenden Schwarz-Weiß-Wellenlängenkanals (λ1).

7. Vorrichtung nach einem beliebigen der Ansprüche 2 bis 6, wobei der Wellenlängenmultiplexer (21) des Upstream-Umwandlungsabschnitts und/oder der Wellenlängendemultiplexer (31) des Downstream-Umwandlungsabschnitts ein angereihtes Wellenleiter-Gitter umfassen.

8. Vorrichtung nach einem beliebigen der Ansprüche 2 bis 7, wobei ein Downstream-Wellenlängenumwandler (32) einen ersten Eingang umfasst, der Verbunden ist mit dem Wellenlängendemultiplexer (31) zwecks Empfangs des jeweiligen optischen Downstreamsignals, und einen zweiten Eingang für den Empfang eines Dauerstrichsignals auf der Trägerfrequenz des downstream liegenden Schwarz-Weiß-Wellenlängenkanals.

9. Vorrichtung nach Anspruch 8, wobei der Downstream-Umwandlungsabschnitt weiterhin eine Laserquelle (33) für das Generieren eines Dauerstrichsignals in der Trägerfrequenz des downstream liegenden Schwarz-Weiß-Wellenlängenkanals (λ10) und einen optischen Splitter (34) umfasst, der ausgelegt ist für das Verteilen des Dauerstrichsignals auf die zweiten Eingänge aus einer Vielzahl der Downstream-Wellenlängenumwandler (32).

10. Vorrichtung nach einem beliebigen der Ansprüche 2 bis 9, wobei der Downstream-Umwandlungsabschnitt weiterhin einen optischen Filter (35) umfasst, der angeordnet ist zwischen einem Downstream-Wellenlängenumwandler (32) und dem entsprechenden bidirektionalen Schwarz-Weiß-Anschluss und dem Blockieren des jeweiligen Wellenlängenkanals (λ6 - λ9) des Frequenzgitters dient.

11. Vorrichtung nach einem beliebigen der Ansprüche 2 bis 10, wobei die Upstream-Wellenlängenumwandler (22) und die Downstream-Wellenlängenumwandler (32) optische Halbleiterverstärker (51) umfassen, die ausgelegt sind für das Ausführen der Wellenlängenumwandlung im optischen Bereich.

12. Vorrichtung nach einem beliebigen der Ansprüche 2 bis 11, wobei der Wellenlängendemultiplexer (31) des Downstream-Umwandlungsabschnitts und der Wellenlängenmultiplexer (21) des Upstream-Umwandlungsabschnitts als integrierte optische Komponente aus Silikon auf der Grundlage von Siliciumsubstrat implementiert wird, wobei die integrierte optische Komponente weiterhin Wellenleiter für die Verbindung des Wellenlängendemultiplexers und des Wellenlängenmultiplexers mit den bidirektionalen Anschlüssen der Vorrichtung umfasst.

13. Vorrichtung nach Anspruch 12, wobei die Upstream-Wellenlängenumwandler (22) und die Downstream-Wellenlängenumwandler (32) als zweite integrierte optische Komponente aus III-V-Halbleitermaterial implementiert werden und auf die erste integrierte optische Komponente mit dem Siliciumsubstrat aufgesetzt werden, wobei die Upstream-Wellenlängenumwandler und die Downstream-Wellenlängenumwandler optisch an die Wellenleiter gekoppelt sind.

14. Vorrichtung nach einem beliebigen der Ansprüche 2 bis 13, wobei die Vorrichtung (10) in oder nahe bei einem Gebäude (8) installiert wird, das eine Vielzahl optischer Kundenendgeräte (4-7) enthält, von denen jedes über einen jeweiligen optischen Kundenlink (9) mit einem jeweiligen bidirektionalen Schwarz-Weiß-Anschluss der Verschaltungsvorrichtung verbunden ist

15. Optisches Kommunikationssystem, umfassend:
eine Verschaltungsvorrichtung (10) gemäß jeglichem der Ansprüche 2 bis 14,
eine Vielzahl optischer Kundenendgeräte (4 -7), jedes davon über einen jeweiligen optischen Kundenlink (9) mit einem jeweiligen bidirektionalen Schwarz-Weiß-Anschluss der Verschaltungsvorrichtung verbunden, wobei jedes optische Kundenendgerät einen optischen Sender umfasst, der ausgelegt ist für das Generieren eines optischen Upstreamsignals, das getragen wird auf dem upstream liegenden Schwarz-Weiß-Wellenlängenkanal (λ1), und einen optischen Empfänger, der ausgelegt ist für den Empfang eines optischen Downstreamsignals, das getragen wird auf dem downstream liegenden Schwarz-Weiß-Wellenlängenkanal (λ10), und
einen zentralen optischen Knoten (1), der über einen zentralen optischen Link (3) verbunden ist mit dem bidirektionalen WDM-Anschluss der Verschaltungsvorrichtung, wobei der zentrale optische Knoten eine Vielzahl optischer Sender umfasst, von denen jeder ausgelegt ist für das Generieren eines optischen Downstreamsignals, das getragen wird von einem jeweiligen Wellenlängenkanal (λ6 - λ9) eines Frequenzgitters, das einem jeweiligen Endgerät der optischen Kundenendgeräte zugewiesen ist, und
eine Vielzahl optischer Empfänger, ein jeder ausgelegt für den Empfang eines optischen Upstreamsignals, das getragen wird von einem jeweiligen Wellenlängenkanal (λ2 - λ5) des Frequenzgitters, der einem jeweiligen Endgerät der optischen Kundenendgeräte zugewiesen ist.

## Revendications

1. Procédé de transmission de signaux optiques modulés entre un noeud optique central (1) et des premier et second terminaux optiques clients (4, 5) de manière bidirectionnelle, le procédé comprenant les étapes suivantes :
générer un premier signal optique aval destiné au premier terminal optique client (4) au niveau du noeud optique central, le premier signal optique aval étant transporté par un premier canal de longueur d'onde (λ6) d'une grille de fréquences,
recevoir un premier signal optique amont provenant du premier terminal optique client au niveau du noeud optique central, le premier signal optique amont étant transporté par un deuxième canal de longueur d'onde (λ2) de la grille de fréquences,
générer un second signal optique aval destiné au second terminal optique client (5) au niveau du noeud optique central, le second signal optique aval étant transporté par un troisième canal de longueur d'onde (λ7) de la grille de fréquences,
recevoir un second signal optique amont provenant du second terminal optique client au niveau du noeud optique central, le second signal optique amont étant transporté par un quatrième canal de longueur d'onde (λ3) de la grille de fréquences,
propager les premier et second signaux optiques amont et les premier et second signaux optiques aval en tant que signaux multiplexés en longueur d'onde sur une liaison optique centrale (3) entre le noeud optique central et un dispositif d'interconnexion optique (10),
dans lequel le dispositif d'interconnexion optique est connecté au premier terminal optique client (4) par une première liaison optique client (9) et au second terminal optique client (5) par une seconde liaison optique client (9), le procédé comprenant en outre, au niveau du dispositif d'interconnexion optique, l'étape suivante :
recevoir le premier signal optique amont transporté par un canal de longueur d'onde noir et blanc amont (λ1) par l'intermédiaire de la première liaison optique client et convertir le premier signal optique amont en le deuxième canal de longueur d'onde (λ2) de la grille de fréquences pour la transmission au noeud optique central par l'intermédiaire de la liaison optique centrale (3), et recevoir le second signal optique amont transporté par le canal de longueur d'onde noir et blanc amont (λ1) par l'intermédiaire de la seconde liaison optique client et convertir le second signal optique amont en le quatrième canal de longueur d'onde (λ3) de la grille de fréquences pour la transmission au noeud optique central par l'intermédiaire de la liaison optique centrale (3),
**caractérisé en ce que** le procédé comprend en outre, au niveau du dispositif d'interconnexion optique, les étapes suivantes :
convertir le premier signal optique aval provenant du premier canal de longueur d'onde (λ6) de la grille de fréquences en un canal de longueur d'onde noir et blanc aval (λ10) et transmettre le premier signal optique aval transporté par le canal de longueur d'onde noir et blanc aval au premier terminal client optique par l'intermédiaire de la première liaison optique client,
convertir le second signal optique aval provenant du troisième canal de longueur d'onde (λ7) de la grille de fréquences en le canal de longueur d'onde noir et blanc aval (λ10) et transmettre le second signal optique aval transporté par le canal de longueur d'onde noir et blanc aval au second terminal optique client par l'intermédiaire de la seconde liaison optique client.

2. Dispositif d'interconnexion optique (10), le dispositif comprenant :
un port WDM bidirectionnel conçu pour être connecté à une liaison optique centrale (3) pour recevoir des signaux optiques aval transportés sur des canaux de longueur d'onde respectifs (λ6-λ9) d'une grille de fréquences et pour transmettre des signaux optiques amont transportés sur des canaux de longueur d'onde respectifs (λ2-λ5) de la grille de fréquences,
une pluralité de ports noir et blanc, chacun étant conçu pour être connecté à une liaison optique client respective (9) pour recevoir un signal optique amont respectif transporté sur un canal de longueur d'onde noir et blanc amont (λ1),
une section de conversion amont (20) disposée entre la pluralité de ports noir et blanc et le port WDM bidirectionnel, la section de conversion amont comprenant :
une pluralité de convertisseurs de longueur d'onde amont (22), chacun étant connecté à l'un respectif des ports noir et blanc pour recevoir le signal optique amont respectif, dans lequel le convertisseur de longueur d'onde amont est conçu pour convertir le signal optique amont du canal de longueur d'onde noir et blanc amont en un canal de longueur d'onde respectif de la grille de fréquences, et
un multiplexeur en longueur d'onde (21) agencé pour combiner la pluralité de signaux optiques amont convertis en longueur d'onde vers le port WDM bidirectionnel pour une transmission par l'intermédiaire de la liaison optique centrale (3),
**caractérisé en ce que** le dispositif est en outre adapté à une utilisation dans le procédé selon la revendication 1, dans lequel les ports noir et blanc sont bidirectionnels et sont conçus pour transmettre un signal optique aval respectif sur un canal de longueur d'onde noir et blanc aval (λ10) vers la liaison optique client respective (9), le dispositif d'interconnexion optique (10) comprenant en outre :
une section de conversion aval (30) disposée entre le port WDM bidirectionnel et la pluralité de ports noir et blanc bidirectionnels, la section de conversion aval comprenant :
un démultiplexeur en longueur d'onde (31) agencé pour séparer les signaux optiques aval reçus par le port WDM bidirectionnel en fonction des canaux de longueurs d'onde, et
une pluralité de convertisseurs de longueur d'onde aval (32), chacun étant agencé pour convertir un signal optique aval respectif séparé par le démultiplexeur en longueur d'onde du canal de longueur d'onde respectif de la grille de fréquences en le canal de longueur d'onde noir et blanc aval et chacun étant connecté à l'un respectif des ports noir et blanc bidirectionnels pour transmettre le signal optique aval converti en longueur d'onde au port noir et blanc bidirectionnel respectif pour une transmission par l'intermédiaire de la liaison optique client (9).

3. Dispositif selon la revendication 2, comprenant en outre un circulateur optique (26, 36) ayant une première branche connectée à la section de conversion amont (20), une deuxième branche connectée à la section de conversion aval (30), et une troisième branche connectée à un port sélectionné dans le groupe constitué du port WDM bidirectionnel et des ports noir et blanc bidirectionnels.

4. Dispositif selon l'une quelconque des revendications 2 à 3, dans lequel un convertisseur de longueur d'onde amont (22) comprend une première entrée connectée au port noir et blanc bidirectionnel respectif pour recevoir le signal optique amont respectif et une seconde entrée pour recevoir un signal à ondes entretenues à la fréquence de porteuse du canal de longueur d'onde respectif de la grille de fréquences.

5. Dispositif selon la revendication 4, dans lequel la section de conversion amont comprend en outre une source de lumière (23) destinée à générer un signal lumineux en large bande et un démultiplexeur en longueur d'onde (24) agencé pour séparer des composantes spectrales respectives du signal lumineux en large bande correspondant aux canaux de longueur d'onde respectifs de la grille de fréquences ; dans lequel le démultiplexeur en longueur d'onde comprend une pluralité de sorties connectées aux secondes entrées de la pluralité de convertisseurs de longueur d'onde amont (22).

6. Dispositif selon l'une quelconque des revendications 2 à 5, dans lequel le multiplexeur en longueur d'onde (21) de la section de conversion amont est conçu pour laisser passer les canaux de longueur d'onde respectifs (λ2- λ5) de la grille de fréquences générés par les convertisseurs de longueur d'onde amont et pour bloquer le canal de longueur d'onde noir et blanc amont (λ1).

7. Dispositif selon l'une quelconque des revendications 2 à 6, dans lequel le multiplexeur en longueur d'onde (21) de la section de conversion amont et/ou le démultiplexeur en longueur d'onde (31) de la section de conversion aval comprend un réseau sélectif planaire.

8. Dispositif selon l'une quelconque des revendications 2 à 7, dans lequel un convertisseur de longueur d'onde aval (32) comprend une première entrée connectée au démultiplexeur en longueur d'onde (31) destinée à recevoir le signal optique aval respectif et une seconde entrée destinée à recevoir un signal à ondes entretenues à la fréquence de porteuse du canal de longueur d'onde noir et blanc aval.

9. Dispositif selon la revendication 8, dans lequel la section de conversion aval comprend en outre une source laser (33) destinée à générer le signal à ondes entretenues à la fréquence de porteuse du canal de longueur d'onde noir et blanc aval (λ10) et un répartiteur optique (34) agencé pour distribuer le signal à ondes entretenues vers les secondes entrées d'une pluralité des convertisseurs de longueur d'onde aval (32).

10. Dispositif selon l'une quelconque des revendications 2 à 9, dans lequel la section de conversion aval comprend en outre un filtre optique (35) disposé entre un convertisseur de longueur d'onde aval (32) et le port noir et blanc bidirectionnel correspondant pour bloquer le canal de longueur d'onde respectif (λ6- λ9) de la grille de fréquences.

11. Dispositif selon l'une quelconque des revendications 2 à 10, dans lequel les convertisseurs de longueur d'onde amont (22) et les convertisseurs de longueur d'onde aval (32) comprennent des amplificateurs optiques à semiconducteur (51) conçus pour exécuter une conversion de longueur d'onde dans le domaine optique.

12. Dispositif selon l'une quelconque des revendications 2 à 11, dans lequel le démultiplexeur en longueur d'onde (31) de la section de conversion aval et le multiplexeur en longueur d'onde (21) de la section de conversion amont sont mis en oeuvre sous forme de composant optique intégré en silicium sur un substrat en silice, dans lequel le composant optique intégré comprend en outre des guides d'onde destinés à connecter le démultiplexeur en longueur d'onde et le multiplexeur en longueur d'onde aux ports bidirectionnels du dispositif.

13. Dispositif selon la revendication 12, dans lequel les convertisseurs en longueur d'onde amont (22) et les convertisseurs en longueur d'onde aval (32) sont mis en oeuvre sous forme de second composant optique intégré en matériaux à semiconducteur III-V et empilés sur le premier composant optique intégré doté du substrat en silice, dans lequel les convertisseurs de longueur d'onde amont et les convertisseurs de longueur d'onde aval sont couplés optiquement aux guides d'onde.

14. Dispositif selon l'une quelconque des revendications 2 à 13, dans lequel le dispositif (10) est installé dans ou près d'un bâtiment (8) contenant une pluralité de terminaux optiques clients (4-7), chacun étant connecté à un port noir et blanc bidirectionnel respectif du dispositif d'interconnexion par une liaison optique client respective (9).

15. Système de communication optique comprenant :
le dispositif d'interconnexion (10) selon l'une quelconque des revendications 2 à 14,
une pluralité de terminaux optiques clients (4-7), chacun étant connecté à un port noir et blanc bidirectionnel respectif du dispositif d'interconnexion par une liaison optique client respective (9), dans lequel chaque terminal optique client comprend un émetteur optique conçu pour générer un signal optique amont transporté sur le canal de longueur d'onde noir et blanc amont (λ1) et un récepteur optique conçu pour recevoir un signal optique aval transporté sur le canal de longueur d'onde noir et blanc aval (λ10), et
un noeud optique central (1) connecté au port WDM bidirectionnel du dispositif d'interconnexion par une liaison optique centrale (3), dans lequel le noeud optique central comprend une pluralité d'émetteurs optiques, chacun étant conçu pour générer un signal optique aval transporté par un canal de longueur d'onde respectif (A6- λ9) d'une grille de fréquences allouée à l'un respectif des terminaux optiques clients, et
une pluralité de récepteurs, chacun étant conçu pour recevoir un signal optique amont transporté par un canal de longueur d'onde respectif (λ2- λ5) de la grille de fréquences allouée à l'un respectif des terminaux optiques clients.
